# FASCICULE DE BREVET EUROPEEN

(11) **EP 1 638 726 B1**
(45) Date de publication et mention de la délivrance du brevet: **02.03.2011**
(21) Numéro de dépôt: 04767859.4
(22) Date de dépôt: 30.06.2004
(51) Int. Cl.: B23K 31/02

(54) **MOYENS D'ASSEMBLAGE DE PIECES COMPORTANT AU MOINS UN CORDON DE SOUDURE REALISE PAR TRANSPARENCE**
MITTEL ZUM ZUSAMMENFÜGEN VON TEILEN MIT MINDESTENS EINER DURCH TRANSPARENZ ERZEUGTEN SCHWEISSNAHT
MEANS FOR ASSEMBLING PARTS, COMPRISING AT LEAST ONE WELDING CORD CREATED BY TRANSPARENCY

(30) Priorité: 02.07.2003 FR 0350283
(43) Date de publication de la demande: 29.03.2006
(73) Titulaire: Commissariat à l'Énergie Atomique et aux Énergies Alternatives, 75015 Paris (FR)
(72) Inventeur: GOBY, Ludovic, F-75019 Paris (FR); AUBERT, Philippe, F-75016 Paris (FR)
(74) Mandataire: Poulin, Gérard
(86) Numéro de dépôt international: PCT/FR2004/050297
(87) Numéro de publication internationale: WO 2005/005091

(56) Documents cités:
- DE-C- 19 850 763
- US-A- 4 577 089
- US-A- 4 831 234
- US-A- 5 250 782

## Description

### DOMAINE TECHNIQUE

La présente invention se rapporte de façon générale à des moyens d'assemblage de pièces comportant au moins un cordon de soudure réalisé par transparence et destiné à solidariser au moins deux pièces entre-elles suivant le préambule de la revendication 1.

D'autre part, l'invention se rapporte également à un procédé d'assemblage de pièces comportant la réalisation de tels moyens d'assemblage.

L'invention trouve notamment une application dans le domaine de l'assemblage des éléments constitutifs de caisses de véhicules automobiles.

### ETAT DE LA TECHNIQUE ANTERIEURE

De façon classique, il est connu que la réalisation d'un cordon de soudure par transparence fait apparaître des extrémités de début et de fin de cordon au niveau desquelles se trouvent des fissures, celles-ci émanant effectivement du choc thermique rencontré lors du début et lors de la fin du procédé de soudage, quelle que soit la technique utilisée.

De plus, il est également connu le fait que les extrémités de début et de fin de cordon, pourvues de fissures, sont des lieux où résident de fortes contraintes, lorsque l'ensemble soudé est soumis à des sollicitations mécaniques extérieures.

Par conséquent, en fatigue, sous des contraintes mécaniques importantes, ces extrémités de début et de fin, sièges d'amorces de rupture, sont les parties du cordon qui cèdent en priorité, et qui déclenchent la rupture de l'ensemble de ce cordon de soudure.

Pour faire face à cet inconvénient, il a été proposé plusieurs solutions dans l'art antérieur.

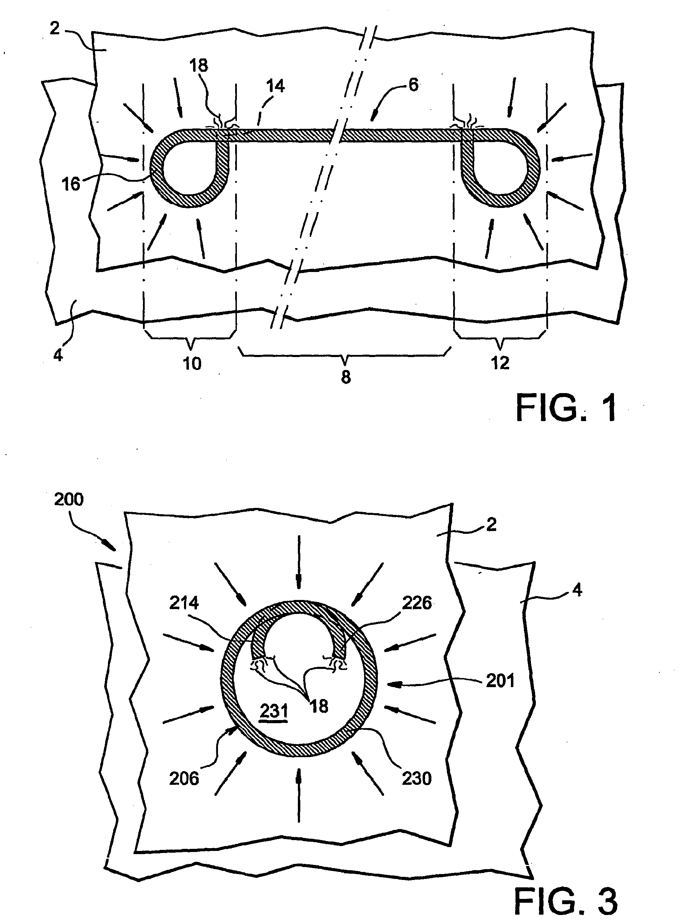

Une première solution représentée sur la figure 1 consiste globalement à refermer le cordon de soudure sur lui-même, au niveau d'une zone de début de cordon ainsi qu'au niveau d'une zone de fin de cordon.

Comme on peut le voir sur cette figure 1, les deux pièces 2 et 4 en forme de tôle sont assemblées à l'aide d'un cordon de soudure 6 réalisé par transparence, à savoir que ce cordon de soudure 6 assure une liaison mécanique rigide entre deux parties superposées appartenant respectivement aux deux pièces 2 et 4. Ce cordon 6 comporte une zone centrale rectiligne dite zone utile 8, dont la longueur est considérée comme suffisante pour pouvoir assurer une liaison rigide entre les deux pièces superposées 2 et 4. De plus, cette zone utile rectiligne 8 est prolongée par une zone de début de cordon 10, ainsi que par une zone de fin de cordon 12.

Comme mentionné précédemment, c' est effectivement au niveau de la zone de début de cordon 10 et de la zone de fin de cordon 12 que le cordon de soudure 6 est refermé sur lui-même. En d'autres termes, on voit que la zone de début de cordon 10 prolonge de façon rectiligne la zone utile 8, avant de se courber et de revenir en direction de cette zone 8 de sorte que l'extrémité de début de cordon 14, débutant la zone 10, se situe dans la partie rectiligne de cette dernière, à proximité de la zone utile 8. Ainsi, la zone de début de cordon 10 est principalement constituée d'une ligne fermée 16, en ce sens que son extrémité fissurée de début de cordon 14 est agencée dans la partie rectiligne du cordon.

De cette façon, les effets provoqués par les sollicitations mécaniques extérieures (représentées schématiquement par les flèches sur la figure 1), sur les fissures 18 de l'extrémité 14, sont sensiblement amoindris par rapport à ceux rencontrés dans la solution classique de cordon de soudure non refermé à ses extrémités. En effet, les sollicitations se répartissent sur l'intégralité de la zone de début de cordon 10 et donc tout autour de là ligne fermée 16, et non plus directement et exclusivement sur l'extrémité fissurée de début de cordon 14.

En outre, il est noté que dans cette solution dite de « moustache », la zone de fin de cordon 12 est réalisée sensiblement de la même façon que celle de la zone de début de cordon 10 exposée ci-dessus.

Néanmoins, il est précisé que si cette solution permet d'augmenter la tenue en fatigue de l'ensemble soudé, elle n'écarte pas pour autant totalement les risques de rupture du cordon de soudure initiée depuis les extrémités fissurées de début et de fin de cordon, sous l'effet des sollicitations mécaniques extérieures.

Une autre solution proposée dans l'art antérieur consiste à démarrer et arrêter le cordon de soudure dans des zones de l'ensemble non sollicitées mécaniquement. Cependant, cette solution est peu répandue dans le sens où ces zones spécifiques peuvent être très éloignées de la zone nécessitant réellement le cordon, voire inexistantes, et de toute façon très difficiles à détecter. De plus, lorsque cette technique est adoptée, outre la nécessité d'effectuer un cordon de soudure plus long que prévu, il peut également être rencontré certaines difficultés d'accès à ces zones spécifiques, notamment lorsque l'ensemble soudé fait partie intégrante d'une caisse de véhicule automobile.

Dans l'art antérieur, une troisième possibilité envisagée a été de fractionner le cordon de soudure en une pluralité de portions de cordon de plus petites longueurs, disposées de façon espacée les unes des autres. Dans une telle configuration, seuls les deux portions de cordon situées aux extrémités sont sollicitées. Ainsi, lorsque cette/ces portions de cordon extrêmes cèdent, c'est au tour des portions de cordon adjacentes d'être sollicitées mécaniquement, et ainsi de suite.

A ce titre, il est noté que si cette solution permet effectivement d'améliorer la tenue en fatigue aux sollicitations mécaniques extérieures par rapport à un cordon de soudure unique, elle n'est cependant applicable qu'à des liaisons de grandes longueurs, et engendre inéluctablement une diminution de la tenue en statique.

Enfin, une dernière proposition de l'art antérieur a consisté à interposer, entre des portions de cordon consécutives et aux extrémités de la liaison, des moyens de fixation du type rivet. De cette manière, les portions de cordon de la liaison rigide obtenue permettent la tenue en statique de l'ensemble de pièces soudées entre-elles, tandis que les rivets sont prévus pour préserver les extrémités de début et de fin de chaque portion de cordon, sièges d'amorces de rupture, et ainsi pour s'affranchir des sollicitations mécaniques extérieures en fatigue.

Bien que cette solution se révèle satisfaisante en termes de tenue mécanique procurée à l'ensemble soudé, elle fait néanmoins nécessairement appel à l'emploi de techniques d'assemblage diverses, ce qui se traduit directement par une augmentation du temps et des coûts de fabrication.

Il est noté que toutes les solutions proposées ci-dessus décrivent des liaisons non fermées, à savoir des liaisons formées par un cordon de soudure disposant de deux extrémités sensiblement éloignées l'une de l'autre et non raccordées entre-elles, comme cela a été illustré pour la première solution proposée dans l'art antérieur. Cependant, les problèmes énumérés précédemment et relatifs à ces solutions se retrouvent dans les cas où les liaisons désirées doivent être fermées, à savoir lorsque le cordon de soudure dispose de deux extrémités sensiblement rapprochées, voire confondues, et de toute façon raccordées entre elles. A cet égard, ce cas de liaison fermée est notamment rencontré lorsque le cordon de soudure réalisé par transparence prend la forme d'un cordon circulaire, et donc celle d'une ligne fermée. Dans une telle configuration, les extrémités fissurées de début et de fin de cordon se trouvant au sein même de la ligne fermée constituant la partie utile du cordon, les risques de rupture de ce cordon initiée depuis ces extrémités fissurées, sous l'effet des sollicitations mécaniques extérieures, sont par conséquent également relativement élevés.

### EXPOSÉ DE L'INVENTION

L'invention a donc pour but de proposer des moyens d'assemblage de pièces comportant au moins un cordon de soudure réalisé par transparence et destiné à solidariser au moins deux pièces entre-elles, ces moyens remédiant au moins partiellement aux inconvénients mentionnés ci-dessus relatifs aux réalisations de l'art antérieur.

Par ailleurs, l'invention a également pour but de présenter un procédé d'assemblage de pièces comportant la réalisation de tels moyens d'assemblage.

Pour ce faire, l'invention a tout d'abord pour objet des moyens d'assemblage de pièces comportant au moins un cordon de soudure réalisé par transparence et destiné à solidariser au moins deux pièces entre-elles, çhaque cordon de soudure disposant d'une extrémité de début de cordon ainsi que d'une extrémité de fin de cordon. Selon l'invention, au moins un cordon de soudure définit au moins une ligne fermée délimitant une zone intérieure dans laquelle se situe au moins l'une des extrémités de début et de fin de ce cordon de soudure.

Avantageusement, en plaçant au moins l'une des extrémités de début et de fin d'un cordon de soudure dans une zone intérieure délimitée par une ligne fermée formée par ce même cordon de soudure, qui est par définition continu, il est alors possible d'isoler totalement la ou les extrémités fissurées concernées vis-à-vis d'une zone utile du cordon. Bien entendu, cet effet technique se retrouve aussi bien lors de la réalisation d'une liaison non fermée telle qu'un cordon de soudure rectiligne, que lors de la formation d'une liaison fermée telle qu'un cordon de soudure circulaire.

Ainsi, un ensemble de pièces muni de tels moyens d'assemblage selon l'invention présente une tenue à la fatigue considérablement accrue par rapport à celle rencontrée avec l'emploi de la première solution décrite de l'art antérieur, sans que cela ne nécessite de procéder à la recherche de zones mécaniquement non sollicitées pour débuter ou terminer un cordon de soudure, ni même de mettre en oeuvre plusieurs techniques d'assemblage différentes. De plus, le fait que l'invention réside dans la formation d'au moins un cordon de soudure, donc dans la réalisation d'une liaison continue, implique que la tenue mécanique globale de l'ensemble est sensiblement améliorée par rapport à celle procurée par l'emploi de portions de cordon espacées.

En outre, il est naturellement noté que le/les cordons de soudure des moyens d'assemblage selon l'invention sont facilement réalisables avec toutes techniques de soudage, par exemple du type TIG, MIG ou laser.

Dans le cas où l'on désire obtenir une/des liaisons mécaniques non fermées, on peut prévoir que les moyens d'assemblage comprennent au moins un cordon de soudure disposant d'une zone de début de cordon débutant par son extrémité de début de cordon, ainsi que d'une zone de fin de cordon s'achevant par son extrémité de fin de cordon, et qu'au moins l'une des zones de début et de fin de cordon définit une ligne fermée délimitant une zone intérieure dans laquelle est située son extrémité de début/fin de cordon associée. Ainsi, avec un tel agencement, les fortes sollicitations mécaniques extérieures s'exerçant sur les zones de début et de fin de cordon n'auront par conséquent aucun effet sur les extrémités fissurées situées à l'intérieur des lignes fermées formées par ces zones, dans la mesure où ces sollicitations sont absorbées par ces mêmes lignes fermées avant de pouvoir se propager en direction des fissures des extrémités.

De préférence, pour au moins un cordon de soudure, les zones de début et de fin de cordon sont agencées en dehors d'une zone utile de ce cordon de soudure, et chaque ligne fermée prend sensiblement la forme d'un cercle.

Dans l'autre cas où l'on désire obtenir une/des liaisons mécaniques fermées, on peut prévoir qu'au moins un cordon de soudure définit une ligne fermée unique constituant une zone utile de ce cordon de soudure, et qu'au moins l'une des extrémités de début et de fin de ce cordon de soudure se situe dans la zone intérieure délimitée par cette ligne fermée unique, et de préférence les deux.

Ainsi, ici encore, les sollicitations mécaniques extérieures s'exerçant tout autour de la ligne fermée unique n'auront par conséquent aucun effet sur les extrémités fissurées situées dans la zone intérieure délimitée par cette dernière, en ce sens que ces sollicitations sont absorbées par cette même ligne fermée constituant la zone utile du cordon de soudure, avant de pouvoir se propager en direction des fissures des extrémités de début et de fin de cordon.

Bien entendu, les moyens d'assemblage selon l'invention peuvent comprendre conjointement au moins une liaison non fermée ainsi qu'au moins une liaison fermée telles que celles décrites ci-dessus, sans sortir du cadre de l'invention.

L'invention a également pour objet un procédé d'assemblage de pièces comportant une étape de réalisation par transparence d'au moins un cordon de soudure destiné à solidariser au moins deux pièces entre-elles, chaque cordon de soudure disposant d'une extrémité de début de cordon ainsi que d'une extrémité de fin de cordon. Selon l'invention, cette étape de réalisation par transparence d'au moins un cordon de soudure est mise en oeuvre de sorte qu'au moins un cordon de soudure définisse au moins une ligne fermée délimitant une zone intérieure dans laquelle se situe au moins l'une des extrémités de début et de fin de ce cordon de soudure.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue schématique de dessus d'un ensemble de deux pièces solidarisées entre-elles par l'intermédiaires de moyens d'assemblage classiques de l'art antérieur ;
- la figure 2 représente une vue schématique de dessus d'un ensemble de deux pièces solidarisées entre-elles par l'intermédiaires de moyens d'assemblage selon un premier mode de réalisation préféré de la présente invention ; et
- la figure 3 représente une vue schématique de dessus d'un ensemble de deux pièces solidarisées entre-elles par l'intermédiaires de moyens d'assemblage selon un second mode de réalisation préféré de la présente invention.

### EXPOSÉ DÉTAILLÉ DE MODES DE RÉALISATION PRÉFÉRÉS

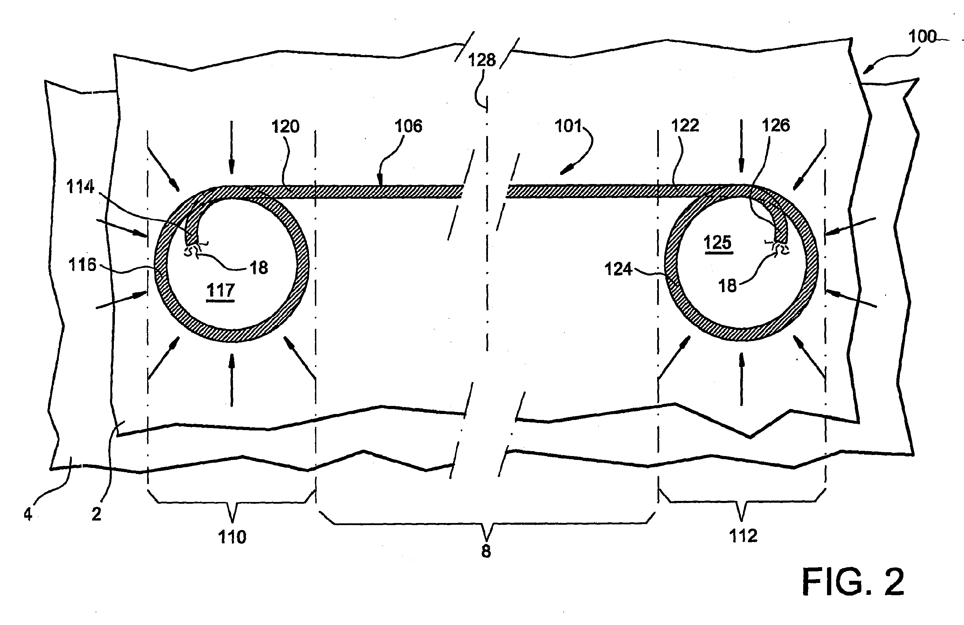

En référence à la figure 2, il est représenté un ensemble 100 de deux pièces 2 et 4 solidarisées entre-elles par l'intermédiaires de moyens d'assemblage 101 selon un premier mode de réalisation préféré de la présente invention.

Bien entendu, les moyens d'assemblage '101 pourraient être prévus pour solidariser entre-elles un nombre de pièces supérieur à deux, sans sortir du cadre de l'invention.

D'autre part, il est indiqué que dans ce premier mode de réalisation préféré de la présente invention, les moyens d'assemblage 101 comprennent un unique cordon de soudure 106 qui va être exposé en détails ci-dessous, mais pourraient naturellement en comporter davantage.

Comme on peut le voir sur la figure 2, le cordon de soudure 106 est du type liaison non fermée et réalisé par transparence, dans le but de solidariser les deux pièces 2 et 4 en forme de tôle disposées de façon à se recouvrir l'une l'autre au moins partiellement.

Le cordon de soudure 106 comporte une zone utile 8 prenant de préférence la forme d'une ligne rectiligne, et dimensionnée pour assurer à elle seule un maintien rigide entre les pièces 2 et 4, quel que soit le type de sollicitations mécaniques extérieures rencontré. Néanmoins, il est précisé que cette zone utile 8 pourrait également être du type ligne courbe non fermée, sans sortir du cadre de l'invention.

De part et d'autre de la zone utile 8, se trouvent respectivement une zone de début de cordon 110, ainsi qu'une zone de fin de cordon 112.

Toujours en référence à la figure 2, on voit que la zone de début de cordon 110 présente des similitudes avec la zone de début de cordon 10 représentée sur la figure 1 et schématisant l'art antérieur. En effet, la zone de début de cordon 110 est telle qu'à ce niveau, le cordon de soudure 106 est refermé sur lui-même. En d'autres termes, on voit que la zone de début de cordon 110 prolonge la zone utile 8, puis se courbe de manière à définir une ligne fermée 116 prenant de préférence la forme d'un cercle fermé. Cette ligne fermée 116 délimite une zone intérieure 117 prenant par conséquent de préférence la forme globale d'un disque, constitué par une partie de chacune des deux pièces 2 et 4.

La particularité de cette zone de début de cordon 110 réside dans le fait qu'une extrémité de début de cordon 114 débutant cette zone 110 ne se situe pas sur la ligne fermée 116, mais à l'intérieur de la zone intérieure 117 délimitée par cette même ligne. Comme on peut l'apercevoir clairement sur la figure 2, il est donc à comprendre que la soudure constituant la zone de début de cordon 110 ne s'achève pas au niveau d'une jonction permettant d'obtenir la ligne fermée 116 comme cela était le cas dans l'art antérieur représenté sur la figure 1, mais se prolonge en se dirigeant vers l'intérieur de cette ligne fermée 116, de sorte qu'au moins l'extrémité 114 dans la zone intérieure 117.

A cet égard, il est noté que l'extrémité de début de cordon 114 peut avoir une longueur de l'ordre de 6 mm, et que la longueur totale du cordon de soudure se situant à l'intérieur de cette ligne fermée 116 peut être d'environ 10 mm. Bien entendu, ces dimensions sont données à titre d'exemple illustratif, et il est naturellement à comprendre que le cordon de soudure 106 est réalisé de sorte que les fissures 18 présentes au niveau extrémité 114 soient situées dans la zone intérieure 117 délimitée par la ligne fermée 116, et de préférence à distance raisonnable de cette dernière, par exemple supérieure à 5 mm. Par ailleurs, on peut prévoir de viser approximativement les centres des lignes fermées 116 et 124 pour réaliser respectivement les extrémités 114 et 126.

De cette manière, les fissures 18 se présentant au niveau de l'extrémité de début de cordon 114 sont éloignées de la ligne fermée 116 et donc totalement isolées à l'intérieur de cette même ligne vis-à-vis de la zone utile 8, ce qui augmente fortement la tenue en fatigue de l'ensemble 100. Cette augmentation s'explique notamment par le fait que les sollicitations mécaniques extérieures (représentées schématiquement par les flèches sur la figure 2) se répartissent sur l'intégralité de la zone de début de cordon 110, et donc tout autour de la ligne fermée 116 sur laquelle elles butent sans pouvoir atteindre les fissures 18 de l'extrémité de début de cordon 114.

Naturellement, il est noté que lors de la réalisation du cordon de soudure 106, ce dernier est réalisé de façon à être continu en définissant successivement l'extrémité de début de cordon 114, la ligne fermée 116, une portion de jonction 120 de la zone 110 située entre la ligne fermée 116 et la zone utile 8, puis cette même zone utile 8 ainsi que la zone de fin de cordon 112 comme cela sera exposé en détails ci-dessous.

De façon générale, la zone de fin de cordon 112 est de conception sensiblement identique à celle de la zone de début de cordon 110. En effet, lors de la réalisation de la zone 112 du cordon de soudure 106, il est successivement effectué une portion de jonction 122 située entre la zone utile 8 et une ligne fermée 124 définie par cette zone 112, cette même ligne fermée 124 délimitant une zone intérieure 125, puis une extrémité de fin de cordon 126 achevant la zone 112 et agencée de telle sorte qu'elle se situe à l'intérieur de la zone intérieure 125 délimitée par la ligne fermée 124.

De plus, on peut voir que dans ce premier mode de réalisation préféré de la présente invention, le cordon de soudure 106 considéré dans le plan de représentation de la figure 2, dispose d'une géométrie symétrique par rapport à un axe central 128 coupant la zone utile 8 perpendiculairement et en son milieu.

Par conséquent, les fissures 18 se présentant au niveau de l'extrémité de fin de cordon 126 sont éloignées de la ligne fermée 124 et donc totalement isolées à l'intérieur de cette même ligne vis-à-vis de la zone utile 8, ce qui augmente encore davantage la tenue en fatigue de l'ensemble 100.

En référence à la figure 3, il est représenté un ensemble 200 de deux pièces 2 et 4 solidarisées entre-elles par l'intermédiaire de moyens d'assemblage 201 selon un second mode de réalisation préféré de la présente invention.

Ici encore, les moyens d'assemblage 201 pourraient être prévus pour solidariser entre-elles un nombre de pièces supérieur à deux, sans sortir du cadre de l'invention.

D'autre part, dans ce second mode de réalisation préféré de la présente invention, les moyens d'assemblage 201 comprennent un unique cordon de soudure 206 qui va être exposé en détails ci-dessous, mais pourraient naturellement en comporter davantage.

Comme on peut le voir sur la figure 3, le cordon de soudure 206 est du type liaison fermée, et réalisé par transparence de la même façon que pour le premier mode de réalisation préféré de la présente invention.

Le cordon de soudure 206 est principalement constitué d'une zone utile prenant la forme d'une unique ligne fermée 230, de préférence circulaire et dimensionnée pour assurer à elle seule un maintien rigide entre les pièces 2 et 4, quel que soit le type de sollicitations mécaniques extérieures rencontré. Cette ligne fermée 230 délimite une zone intérieure 231 prenant par conséquent de préférence la forme globale d'un disque, constitué par une partie de chacune des deux pièces 2 et 4.

La particularité de ce cordon de soudure 206 réside dans le fait qu'il dispose d'une extrémité de début de cordon 214 ainsi qu'une extrémité de fin de cordon 226 qui ne sont pas situées sur l'unique ligne fermée 230 comme cela était le cas dans l'art antérieur, mais toutes deux agencées de manière à se trouver à l'intérieur de la zone intérieure 231 délimitée par cette ligne fermée 230.

Comme on peut l'apercevoir clairement sur la figure 3, il est donc à comprendre que la soudure constituant la zone utile, donc la ligne fermée 230, ne s'achève pas au niveau d'une jonction permettant d'obtenir cette ligne 230, mais se prolonge en se dirigeant vers l'intérieur de cette ligne fermée 230 de sorte qu'au moins les extrémités 214 et 226 se situent dans la zone intérieure 231 fermée par les pièces 2 et 4.

Toujours à titre d'exemple illustratif, les extrémité 214 et 226 peuvent avoir une longueur de l'ordre de 6 mm, et la longueur totale du cordon de soudure se situant à l'intérieur de cette ligne fermée 230, au niveau de chaque extrémité 214 et 226, peut être d'environ 10 mm. Ici encore, on peut prévoir de viser approximativement le centre de la ligne fermée 230 pour réaliser les extrémités 214 et 226.

Lors de la réalisation du cordon de soudure 206, ce dernier est effectué de façon à être continu en définissant successivement l'extrémité de début de cordon 214, la ligne fermée 230, ainsi que l'extrémité de fin de cordon 226.

De cette manière, les fissures 18 se présentant au niveau des extrémités de début et de fin de cordon 214 et 226 sont éloignées de la ligne fermée 230 et donc totalement isolées à l'intérieur de cette même ligne constituant la zone utile du cordon de soudure 206, ce qui augmente fortement la tenue en fatigue de l'ensemble 100. Cette augmentation s'explique notamment par le fait que les sollicitations mécaniques extérieures (représentées schématiquement par les flèches sur la figure 3) se répartissent tout autour de la ligne fermée 230 sur laquelle elles butent sans pouvoir atteindre les fissures 18 des extrémités de début et de fin de cordon 214 et 226.

Bien entendu, diverses modifications peuvent être apportées par l'homme du métier aux moyens d'assemblage 101 et 201 qui viennent d'être décrits, uniquement à titre d'exemples non limitatifs.

## Revendications

1. Moyens d'assemblage (101,201) de pièces comportant au moins un cordon de soudure (106,206) réalisé par transparence et destiné à solidariser au moins deux pièces (2,4) entre-elles, chaque cordon de soudure (106,206) disposant d'une extrémité de début de cordon (114,214) ainsi que d'une extrémité de fin de cordon (126,226), **caractérisés en ce qu'**au moins un cordon de soudure (106,206) présente chacune de ses extrémités de début et de fin de cordon (114, 214, 126, 226) dans une zone intérieure (117, 125, 231) délimitée par une ligne fermée (116, 124, 230) définie par ledit cordon de soudure.

2. Moyens d'assemblage (101) de pièces selon la revendication 1, **caractérisés en ce qu'**au moins un cordon de soudure (106) dispose d'une zone de début de cordon (110) débutant par son extrémité de début de cordon (114), ainsi que d'une zone de fin de cordon (112) s'achevant par son extrémité de fin de cordon (126), et **en ce qu'**au moins l'une des zones de début et de fin de cordon (110,112) définit une ligne fermée (116,124) délimitant une zone intérieure (117, 125) dans laquelle est située son extrémité de début/fin de cordon associée (114,126).

3. Moyens d'assemblage (101) selon la revendication 2, **caractérisés en ce que** pour au moins un cordon de soudure (106), les zones de début et de fin de cordon (110,112) sont agencées en dehors d'une zone utile (8) de ce cordon de soudure (106).

4. Moyens d'assemblage (101) de pièces selon l'une quelconque des revendications précédentes, **caractérisés en ce que** pour au moins un cordon de soudure (106), chaque ligne fermée (116,124) prend sensiblement la forme d'un cercle.

5. Moyens d'assemblage (201) de pièces selon la revendication 1, **caractérisés en ce qu'**au moins un cordon de soudure (206) définit une ligne fermée unique (230) constituant une zone utile de ce cordon de soudure (206), et **en ce qu'**au moins l'une des extrémités de début et de fin (214, 226) de ce cordon de soudure (206) se situe dans la zone intérieure (231) délimitée par cette ligne fermée unique (230).

6. Procédé d'assemblage de pièces comportant une étape de réalisation par transparence d'au moins un cordon de soudure (106,206) destiné à solidariser au moins deux pièces (2,4) entre-elles, chaque cordon de soudure (106,206) disposant d'une extrémité de début de cordon (114,214) ainsi que d'une extrémité de fin de cordon (126,226), **caractérisé en ce que** cette étape de réalisation par transparence d'au moins un cordon de soudure est mise en oeuvre de sorte que ledit cordon de soudure (106,206) présente chacune de ses extrémités de début et de fin de cordon (114,214,126, 226) dans une zone intérieure (117,125,231) délimitée par une ligne fermée (116,124,230) définie par ledit cordon de soudure.

## Claims

1. Assembly means (101, 201) for parts, comprising at least one weld bead (106, 206) produced by transparency and intended to fix at least two parts (2, 4) to each other, each weld bead (106, 206) having a start point (114, 214) and an end point (126, 226), **characterised in that** at least one weld bead (106, 206) has each of its start and end points (114, 214, 126, 226) in an interior zone (117, 125, 231) delimited by a closed line (116, 124, 230) defined by said weld bead.

2. Assembly means (101) for parts according to claim 1, **characterised in that** at least one weld bead (106) includes a weld bead start zone (110) beginning at its weld bead start point (114), and a weld bead end zone (112) terminating at its weld bead end point (126), and **in that** at least one of the weld start and weld end zones (110, 112) defines a closed line (116, 124) delimiting an internal zone (117, 125) inside which its associated weld bead start/end point is located (114, 126).

3. Assembly means (101) according to claim 2, **characterised in that** for at least one weld bead (106), the weld bead start and end zones (110, 112) are arranged outside a useful zone (8) of this weld bead (106).

4. Assembly means (101) for parts according to any one of the previous claims, **characterised in that** for at least one weld bead (106), each closed line (116, 124) is in the form of a circle.

5. Assembly means (201) for parts according to claim 1, **characterised in that** at least one weld bead (206) defines a single closed line (230) forming a useful zone for this weld bead (206), and **in that** at least one of the start and end points (214, 226) of this weld bead (206) is located in the internal zone (231) delimited by this single closed line (230).

6. Assembly method for parts, comprising a step to produce at least one weld bead (106, 206) by transparency, designed to fix at least two parts (2, 4) to each other, each weld bead (106, 206) having a weld bead start point (114, 214) and a weld bead end point (126, 226), **characterised in that** this step to produce at least one weld bead by transparency is implemented such that said weld bead (106, 206) has each of its start and end points (114, 214, 126, 226) in an interior zone (117, 125, 231) delimited by a closed line (116, 124, 230) defined by said weld bead.

## Patentansprüche

1. Mittel zum Fügen (101, 201) von Teilen, umfassend wenigstens eine Schweißnaht (106, 206), ausgeführt mit Hilfe (einer) oberen/-er Lage(n), die für die Schweißenergie durchlässig ist/sind, und dazu bestimmt, wenigstens zwei Teile (2, 4) miteinander zu verbinden, wobei jede Schweißnaht (106, 206) einen Endbereich am Anfang der Naht (114, 214) sowie einen Endbereich am Ende der Naht (126, 226) aufweist, **dadurch gekennzeichnet, dass** wenigstens eine Schweißnaht (106, 206) jeweils ihren Endbereich am Anfang der Naht und ihren Endbereich am Ende der Naht (114, 214, 126, 226) in einem inneren Bereich (117, 125, 231) aufweist, welcher durch eine geschlossene Linie (116, 124, 230) eingegrenzt ist, die durch die Schweißnaht definiert ist.

2. Mittel zum Fügen (101) von Teilen nach Anspruch 1, **dadurch gekennzeichnet, dass** wenigstens eine Schweißnaht (106) einen Bereich am Anfang der Naht (110) aufweist, welcher an ihrem Endbereich am Anfang der Naht (114) beginnt, sowie einen Bereich am Ende der Naht (112), welcher an ihrem Endbereich am Ende der Naht (126) endet, und **dadurch**, dass wenigstens einer der Bereiche am Anfang der Naht und am Ende der Naht (110, 112) eine geschlossenen Linie (116, 124) definiert, welche einen inneren Bereich (117, 125) eingrenzt, in dem sich ihr zugeordneter Endbereich am Anfang/Ende der Naht (114, 126) befindet.

3. Mittel zum Fügen (101) nach Anspruch 2, **dadurch gekennzeichnet, dass** für wenigstens eine Schweißnaht (106) der Bereich am Anfang und am Ende der Naht (110, 112) außerhalb eines eigentlichen Nahtbereichs (8) der Schweißnaht (106) angeordnet sind.

4. Mittel zum Fügen (101) von Teilen nach einem der vorhergehenden Ansprüche, **dadurch gekennzeichnet, dass** für wenigstens eine Schweißnaht (106) jede geschlossene Linie (116, 124) im Wesentlichen die Form eines Kreises annimmt.

5. Mittel zum Fügen (201) von Teilen nach Anspruch 1, **dadurch gekennzeichnet, dass** wenigstens eine Schweißnaht (206) eine einzige geschlossene Linie (230) definiert, welche einen eigentlichen Nahtbereich der Schweißnaht (206) darstellt, und **dadurch**, dass wenigstens eines der Enden am Anfang und am Ende (214, 226) der Schweißnaht (206) sich in dem inneren Bereich (231) befindet, welcher durch die einzige geschlossene Linie (230) eingegrenzt ist.

6. Verfahren zum Fügen von Teilen, umfassend einen Schritt des Ausführens, mit Hilfe (einer) oberen/-er Lage(n), die für die Schweißenergie durchlässig ist/sind, wenigstens einer Schweißnaht (106, 206), welche dazu bestimmt ist, wenigstens zwei Teile (2, 4) miteinander zu verbinden, wobei jede Schweißnaht (106, 206) einen Endbereich am Anfang der Naht (114, 214) sowie einen Endbereich am Ende der Naht (126, 226) aufweist, **dadurch gekennzeichnet, dass** der Schritt des Ausführens wenigstens einer Schweißnaht mit Hilfe (einer) oberen/-er Lage(n), die für die Schweißenergie durchlässig ist/sind, derart umgesetzt wird, dass die Schweißnaht (106, 206) jeweils ihren Endbereich am Anfang der Naht und ihren Endbereich am Ende der Naht (114, 214, 126, 226) in einem inneren Bereich (117, 125, 231) aufweist, welcher durch eine geschlossene Linie (116, 124, 230) eingegrenzt ist, die durch die Schweißnaht definiert ist.
